# EUROPEAN PATENT APPLICATION

(11) **EP 2 306 478 A2**
(43) Date of publication of application: **06.04.2011**
(21) Application number: 10175685.6
(22) Date of filing: 08.09.2010
(51) Int. Cl.: H01G 9/20

(54) **Dye-sensitized solar cell, manufacturing method of the same and manufacturing method of working electrode for dye-sensitized solar cell**

(30) Priority: 30.09.2009 JP 2009227302
(71) Applicant: TDK Corporation, Tokyo 103-8272 (JP)
(72) Inventor: Osawa, Miki, Tokyo 103-8272 (JP); Suzuki, Mitsunari, Tokyo 103-8272 (JP)
(74) Representative: Grünecker, Kinkeldey, Stockmair & Schwanhäusser Anwaltssozietät

(57) **Abstract**

It is an object of the present invention to provide a dye-sensitized solar cell, etc. capable of preventing, even when a highly-conductive electrolyte is employed, a short circuit between a transparent conductive film of a working electrode and the electrolyte, and thereby enhancing reliability with improved photoelectric conversion characteristics and improved durability.

A short circuit-prevention layer is patterned in a frame shape so as to surround the periphery of a dye-supported metal oxide layer on a region of a conductive surface where the dye-supported metal oxide layer is not formed. The short circuit-prevention layer is formed to be thinner than the dye-supported metal oxide layer, and the dye-supported metal oxide layer is formed so as to cover the conductive surface in the frame of the short circuit-prevention layer and to extend onto the short circuit-prevention layer. The dye-supported metal oxide layer and a sealing material are arranged apart from each other via the short circuit-prevention layer.

## Description

### Cross-references to Related Applications

This application relates to and claims priority from Japanese Patent Application No. 2009-227302, filed on September 30, 2009, the entire disclosure of which is incorporated herein by reference.

### Background of the Invention

### Field of the Invention

The present invention relates to a dye-sensitized solar cell, a manufacturing method of the same, and a manufacturing method of a working electrode for the dye-sensitized solar cell.

### Description of the Related Art

In recent years, dye-sensitized solar cells have gained increasing interest, since the dye-sensitized solar cells can be manufactured at low cost and have a higher photoelectric conversion efficiency among organic solar cells. A dye-sensitized solar cell has three primary elements - a working electrode, an electrolyte and a counter electrode. A working electrode which is typically used is configured in such a way that a porous dye-supported metal oxide layer is formed on a transparent conductive film formed on a substrate. A typical dye-supported metal oxide layer is configured in such a way that a sensitizing dye is supported on (adsorbed in) a metal oxide semiconductor (metal oxide layer). A known counter electrode is configured in such a way that a platinum film is formed on a transparent conductive film formed on a substrate. In order to manufacture dye-sensitized solar cells (cells) of this type, generally, a working electrode and a counter electrode are arranged apart from each other so as to face each other, where a sealing material is provided at the outer ends of the facing surfaces of these electrodes to seal and joint the peripheries of the electrodes, and an electrolyte is sealed in a space defined by such sealing.

Of the electrolytes used for the dye-sensitized solar cells, a liquid type electrolyte (electrolyte solution) containing organic solvent is widely known. However, the use of such an electrolyte solution might cause the leakage of the solution, fire and explosion associated with such leakage, environmental contamination resulting from the volatilization of solvent, etc. Accordingly, it has been an important object in recent years to achieve quasi-solid (solidified, gelled, etc.) electrolytes.

As an example of such quasi-solid electrolytes, a quasi-solid electrolyte obtained by mixing and kneading a highly-conductive carbon material such as carbon black and a trace amount of solvent into a paste is known. Such a quasi-solid electrolyte can achieve a high photoelectric conversion efficiency even without the use of a platinum catalyst in the counter electrode, and is thus considered as constituting one important element for achieving the improvement of photoelectric conversion efficiency, as well as achieving cost reduction, of dye-sensitized solar cells.

However, since the carbon material in the quasi-solid electrolyte above has a very high conductivity, a short circuit occurs between the transparent conductive film of the working electrode and the counter electrode when the quasi-solid electrolyte makes contact with, even if only slightly, the transparent conductive film below the metal oxide semiconductor, which results in the problem that the photoelectric conversion characteristics of the resulting dye-sensitized solar cell are degraded. In other words, the highly-conductive electrolyte makes it more difficult to seal the solar cell (cell) as compared to the liquid-type electrolyte, and therefore there has been a desire to develop highly-reliable cell shapes that enable sealing without causing a short circuit during cell fabrication even when a highly-conductive electrolyte is used.

As a technique for preventing a short circuit in dye-sensitized solar cells, for example, Japanese laid-open publication No. 2005-108807 discloses a solid dye-sensitized device in which a short circuit-prevention layer made of an N-type conductive polymer, a fullerene or the like is formed on a transparent conductive film made of ITO or the like, and a porous metal oxide layer made of TiO₂ or the like is formed on the short circuit-prevention layer (see Patent Document 1). Japanese laid-open publication Nos. 2008-059851 and 2004-087622 each disclose a dye-sensitized solar cell in which a porous metal oxide layer made of TiO₂ or the like is formed on a transparent conductive film made of FTO, SnO₂ or the like, and then a short circuit-prevention layer such as a fluorocarbon film or a short circuit-prevention layer made of magnesium oxide or the like is formed on the transparent conductive film and/or the metal oxide layer (see Patent Documents 2 and 3).

### [Patent Documents]

Patent Document 1: Japanese laid-open publication No. 2005-108807
Patent Document 2: Japanese laid-open publication No. 2008-059851
Patent document 3: Japanese laid-open publication No. 2004-087622

However, in the technique of Patent Invention 1, since the short circuit-prevention layer that is a thin but dense layer with a small resistivity using a material, such as N-type conductive polymer or a fullerene having a small resistivity and dense film texture, the short circuit-prevention layer does not provide sufficient insulation, and thus, in the configuration where a highly-conductive electrolyte (e.g., the above-mentioned quasi-solid electrolyte) is employed, a short circuit might occur between the transparent conductive film and the electrolyte. On the other hand, since the short circuit-prevention layer, even though its resistivity is small, is formed between the dye-supported metal oxide layer and the transparent conductive film, the short circuit-prevention layer performs as an internal resistance and increases the cell resistance, which might degrade the photoelectric conversion characteristics. In addition, the substances such as N-type conductive polymer and fullerene absorb light in the visible range, and thus might reduce the amount of light incident on the working electrode, thereby degrading the photoelectric conversion characteristics.

On the other hand, in the techniques in Patent Documents 2 and 3, since the short circuit-prevention layer is formed on the metal oxide layer, it is substantially impossible to completely cover only the region of the transparent conductive film which is not provided with the metal oxide layer with the short circuit-prevention layer, and therefore these techniques are not sufficiently reliable in preventing a short circuit between the transparent conductive film and the electrolyte. In order to avoid such a problem, the short circuit-prevention layer must be formed also on the metal oxide layer; however, such a configuration would reduce the surface area of the metal oxide layer, and thus cause degradation of the photoelectric conversion characteristics.

Another possible solution would be a configuration in which, in order to avoid contact between the transparent conductive film of the working electrode and the electrolyte, the inner peripheral wall of the sealing material for sealing the cell and the outer peripheral wall of the dye-supported metal oxide layer are formed in close contact without any gap therebetween, so that a region in the transparent conductive film which is exposed without the dye-supported metal oxide layer formed thereon does not exist in the cell in which the electrolyte is sealed. However, with such a configuration, resin that is left uncured when the sealing material is cured would infiltrate into the porous metal oxide layer, which would cause the photoelectric conversion characteristics to be degraded, and furthermore, would decrease the durability of the dye-sensitized solar cell because the resin would be cured or deteriorated in the dye-supported metal oxide layer during a long period of use and/or the presence of the resin would cause the electrolyte and dye to be deteriorated or decomposed.

### Summary of the Invention

The present invention has been made in view of the circumstances above, and it is an object of the present invention to provide a dye-sensitized solar cell that are capable of preventing, even when a highly-conductive electrolyte is employed, a short circuit between a transparent conductive layer of the working electrode and the electrolyte and thus providing high reliability with improved photoelectric conversion characteristics and improved durability, a manufacturing method thereof, and a manufacturing method of a working electrode for the dye-sensitized solar cell.

In order to achieve the object above, the inventors of the present invention have committed to intensive research and found that the problem above can be solved by re-designing the shape of a cell and configuring a conductive surface of a working electrode, a dye-supported metal oxide layer and a sealing material in predetermined shapes, thereby achieving the present invention.

A dye-sensitized solar cell according to an aspect of the present invention includes: a working electrode; a counter electrode that is arranged apart from the working electrode so as to face the working electrode; an electrolyte provided between the working electrode and the counter electrode; and a sealing material that seals the electrolyte, wherein: the electrolyte is a quasi-solid electrolyte comprising conductive particles; the working electrode has a base having a conductive surface and a dye-supported metal oxide layer formed on a part of the conductive surface; a short circuit-prevention layer is patterned in a frame shape in a region on the conductive surface where the dye-supported metal oxide layer is not formed, so as to surround a periphery of the dye-supported metal oxide layer; the short circuit-prevention layer is formed to be thinner than the dye-supported metal oxide layer, and the dye-supported metal oxide layer is formed so as to cover the conductive surface in the frame of the short circuit-prevention layer and to extend onto the short circuit-prevention layer; and the dye-supported metal oxide layer and the sealing material are arranged apart from each other via the short circuit-prevention layer.

The "frame shape" in this specification refers to a shape that surrounds the periphery of the dye-supported metal oxide layer, and to the concept which includes, for example, a triangle, a rectangle, a polygon, a star shape, a geometric shape, a circle, an ellipse, an indefinite shape, and a shape formed by connecting these shapes together.

When the inventors measured the characteristics of the dye-sensitized solar cell configured as described above, they found out that the photoelectric conversion characteristics and durability have been remarkably improved as compared to the related art. Although the details of the functional mechanism that contributes to such effects are still unclear, for example the following presumption can be made.

In the dye-sensitized solar cell having the configuration above, the short circuit-prevention layer is formed in a frame shape on the region of the conductive surface where the dye-supported metal oxide layer is not formed, so as to surround the periphery of the dye-supported metal oxide layer, and the dye-supported metal oxide layer is formed so as to cover the conductive surface of the working electrode in the frame of the short circuit-prevention layer and to extend onto the short circuit-prevention layer, and therefore a short circuit is prevented both in the region where the dye-supported metal oxide layer is formed and in the region where the dye-supported metal oxide layer is not formed.
Specifically, in the region where the dye-supported metal oxide layer is not formed, since the electrolyte and the conductive surface of the working electrode are structurally spaced apart from each other by the short circuit-prevention layer and the dye-supported metal oxide layer projected from the inner side of the frame of the short circuit-prevention layer onto the short circuit-prevention layer, contact between the electrolyte and the conductive surface of the working electrode is blocked by the dye-supported metal oxide layer and the short circuit-prevention layer, thereby ensuring that a short circuit is prevented.
On the other hand, in the region where the dye-supported metal oxide layer is formed, since the dye-supported metal oxide layer does not allow the quasi-solid electrolyte to infiltrate into a deep part thereof, contact between the electrolyte and the conductive surface of the working electrode, which could occur due to the infiltration of a liquid-type electrolyte into dye-supported metal oxide layer in the related art, in the region where the dye-supported metal oxide layer is formed is structurally blocked, thereby ensuring that a short circuit is prevented.

Moreover, in the dye-sensitized solar cell having the configuration above, the dye-supported metal oxide layer is formed not via the short circuit-prevention layer but directly on the conductive surface, an increase in cell resistance, which was caused by the short circuit-prevention layer in the related art, can be suppressed.

Furthermore, in the dye-sensitized solar cell having the configuration above, the dye-supported metal oxide layer and the sealing material are arranged apart from each other via the short circuit-prevention layer, and the sealing material is prevented from being infiltrated into the dye-supported metal oxide layer, and therefore a degradation of the photoelectric conversion characteristics and a decrease in the durability caused by the infiltration of the sealing material can be suppressed.

As a result of the combination of the effects above, in the dye-sensitized solar cell having the configuration above, it can be inferred that: even when a highly-conductive electrolyte is employed, a short circuit between the transparent conductive film of the working electrode and the electrolyte can be prevented; an increase in cell resistance is suppressed; and the photoelectric conversion characteristics and the durability are remarkably improved. However, effects provided by the present invention are not limited to these effects.

In the configuration above, it is preferable that the short circuit-prevention layer is not formed on a surface of the dye-supported metal oxide layer. With such a configuration, the surface area of the dye-supported metal oxide layer serving as a light-receiving part will not be reduced, and thus a degradation in the photoelectric conversion characteristics can be suppressed.

In the configuration above, it is preferable that the sealing material is a cured resin article. Since the sealing material is prevented from being infiltrated into the dye-supported metal oxide layer as described above in the dye-sensitized solar cell having the configuration above, such a configuration may be particularly effective in an embodiment in which an uncured resin composition is cured to form the sealing material.

A manufacturing method of a working electrode for a dye-sensitized solar cell according to another aspect of the present invention is a method that can effectively fabricate the working electrode for the dye-sensitized solar cell according to the above aspect of the present invention, the method including the steps of: preparing a base having a conductive surface; patterning a short circuit-prevention layer in a frame shape on the conductive surface; and forming a dye-supported metal oxide layer on the conductive surface in the frame of the short circuit-prevention layer and on the frame of the short circuit-prevention layer, the steps being carried out in the this order.

A manufacturing method of a dye-sensitized solar cell according to another aspect of the invention is a method that can fabricate the dye-sensitized solar cell according to the above aspect of the present invention, the method including the steps of: preparing a base having a conductive surface; patterning a short circuit-prevention layer in a frame shape on the conductive surface; and forming a dye-supported metal oxide layer on the conductive surface in the frame of the short circuit-prevention layer and on the frame of the short circuit-prevention layer and thereby fabricating a working electrode, the steps being carried out in this order, and the method further comprising the steps of: preparing a counter electrode; arranging an electrolyte between the working electrode and the counter electrode; arranging a sealing material on outer ends of opposing surfaces of the working electrode and the counter electrode to seal and joint peripheries of the working electrode and the counter electrode, the sealing material being arranged apart from the dye-supported metal oxide layer.

In the manufacturing methods above, for the same reasons, it is preferable that the short circuit-prevention layer is not formed on a surface of the dye-supported metal oxide layer. Also, it is preferable that the sealing material is a cured resin article.

According to the present invention, even when a highly-conductive electrolyte is employed, a short circuit between the transparent conductive film of the working electrode and the electrolyte can be prevented, thereby achieving a dye-sensitized solar cell and a manufacturing method thereof that are highly reliable with improved photoelectric conversion characteristics and improved durability, as well as a manufacturing method of a working electrode that can achieve the dye-sensitized solar cell exhibiting such high performance.

### Brief Description of the Drawings

Fig. 1 is a cross-sectional view schematically showing a dye-sensitized solar cell (cell) according to an embodiment of the present invention.
Fig. 2 is a flowchart showing a manufacturing method of a working electrode (photoelectric conversion electrode) and the dye-sensitized solar cell (cell) according to an embodiment of the present invention.
Fig. 3 is a perspective view schematically showing the manufacturing method of the working electrode (photoelectric conversion electrode) according to an embodiment of the present invention.
Fig. 4 is a perspective view schematically showing the manufacturing method of the working electrode (photoelectric conversion electrode) according to an embodiment of the present invention.
Fig. 5 is a graph showing the photoelectric conversion characteristics of dye-sensitized solar cells (cells) in Example 1 and in Comparative Examples 1 and 2.

### Description of the Preferred Embodiments

Embodiments of the present invention will be described below. Note that the same element is denoted with the same reference numerals, and repeated descriptions thereof will be omitted. Also, note that the positional relationships such as top and bottom, as well as right and left, are based on the positional relationships shown in the drawings, unless otherwise particularly specified. Moreover, the ratios of dimensions in the drawings are not limited to the ratios shown. The following embodiments are merely an example for describing the present invention, and the present invention is not limited only to the embodiments.

**First Embodiment**

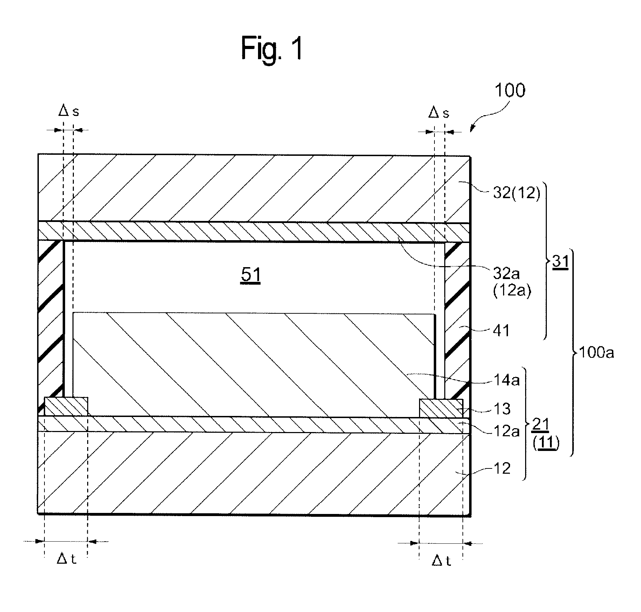

Fig. 1 is a cross-sectional view schematically showing one embodiment of a dye-sensitized solar cell (solar cell, cell) according to the present invention. The dye-sensitized solar cell 100 has a photoelectric conversion electrode (working electrode) 21; a counter electrode 31 that is arranged apart from the photoelectric conversion electrode 21 so as to face the photoelectric conversion electrode 21; a sealing material 41 that is formed so as to surround the peripheries of the photoelectric conversion electrode 21 and the counter electrode 31; and an electrolyte 51 sealed in a sealed space defined by the photoelectric conversion electrode 21, the counter electrode 31 and the sealing material 41. The photoelectric conversion electrode 21 is equipped with a base 12 having a conductive surface 12a, and a short circuit- prevention layer 13 and a dye-supported metal oxide layer 14a are formed on the conductive surface 12a.

Specific examples of the base 12 having the conductive surface 12a include a conductive base and a base having a transparent conductive film on a part of the base or on the entire base, such as a conductive PET film.

The type, size and shape of the base 12 are not particularly limited so long as the base 12 can support at least the short circuit-prevention layer 13 and the dye-supported metal oxide layer 14a. For example, a plate-like base or a sheet-like base is preferably used. The base 12 preferably has a translucency, and more preferably has an excellent translucency with respect to light in the visible range. The base 12 preferably has flexibility, and the base 12 having flexibility can provide structures of various shapes by making good use of the flexibility. Specific examples of the base 12 include a glass substrate, a plastic substrate such as polyethylene terephthalate, polyethylene, polypropylene, and polystyrene, a metal substrate, an alloy substrate, a ceramic substrate, and a laminate of these substrates.

Specific examples of a transparent conductive film that may serve as the conductive surface 12a include ITO, SnO₂ InO₃ and FTO obtained by doping SnO₂ with fluorine. Formation methods for these transparent conductive films are not particularly limited, and known techniques such as deposition, CVD, spraying, spin coating, and dipping can be used. The film thickness of the transparent conductive film can be set appropriately.

The conductive surface 12a of the base 12 may be subjected to various types of known surface modification treatments as needed. Specific examples of the surface modification treatment include known surface treatments such as: a degreasing treatment with a surfactant, an organic solvent, an aqueous alkaline solution, or the like; a mechanical polishing treatment; an immersion treatment in an aqueous solution; a preliminary electrolysis treatment with an electrolyte solution; a washing treatment; and a drying treatment.

On the conductive surface 12a of the base 12, the short circuit-prevention layer 13 is patterned in a frame shape. In this embodiment, the short circuit-prevention layer 13 is formed in a rectangular frame shape, where the outer size and the inner size of the frame shape are substantially similar to the outer size of the dye-supported metal oxide layer 14a, and the width of the frame (the width of the frame member) is Δt. Note that the shape (planar shape) of the short circuit-prevention layer 13 is not particularly limited, and any shape can be employed. However, the short circuit-prevention layer 13 is formed in a frame shape in this embodiment in view of an improvement in sealing stability.

The short circuit-prevention layer 13 is required to have a higher insulation properties as compared to the conductive surface 12a of the base 12. Although the insulation properties of the short circuit-prevention layer 13 is not particularly limited and may be determined in accordance with the conductivity of the electrolyte 51 so as to prevent a short circuit between the electrolyte 51 and the conductive surface 12a of the base 12, it is preferably 2 MΩ or higher, more preferably 5 MΩ or higher, and even more preferably 10 MΩ or higher. The insulation properties of the short circuit-prevention layer 13 may be appropriately determined depending on the raw material and the thickness of the film.

A raw material constituting the short circuit-prevention layer 13 (insulating material) is not particularly limited and may be appropriately selected from known materials. In this embodiment, it is preferable that the raw material constituting the short circuit-prevention layer 13 is difficult to be dissolved in the electrolyte 51 and exhibits an excellent adhesiveness to the sealing material 41. Specific examples of the raw materials include: an inorganic oxide such as silicon oxide, aluminum oxide and zirconium oxide; and a resin composition such as UV curable resin, thermosetting resin and thermoplastic resin. Specific examples of the resin composition include (meth)acrylic-based resin, polyolefin-based resin, urethane-based resin , urethane acrylate-based resin, silicone-based resin, modified silicone-based resin, reactive polyisobutylene resin, epoxy-based resin, epoxy acrylate-based resin, polyether-based resin, polyester-based resin, fluorine-based resin, natural rubber, synthetic rubber and silane coupling agent, but the resin composition is not limited thereto. Note that these resin compositions may be used alone or in combination. The raw material constituting the short circuit-prevention layer 13 is preferably an inorganic oxide in consideration of insulation properties and stability in film fabrication.

Although the thickness of the short circuit-prevention layer 13 is not particularly limited so long as: it can ensure insulation between the electrolyte 51 and the conductive surface 12a of the base 12; and it is thinner than the dye-supported metal oxide layer 14a, the thickness is preferably from 1 nm to 10 µm, more preferably from 10 nm to 5 µm, and even more preferably from 50 nm to 1 µm. If the thickness of the short circuit-prevention layer 13 is less than 1 nm, it would be difficult to form the film and the film thickness would become nonuniform, which would tend to make it difficult to ensure the insulation. If the thickness of the short circuit-prevention layer 13 exceeds 1 µm, productivity and cost efficiency would tend to be lowered. Note that if the thickness of the short circuit-prevention layer 13 is equal to or larger than the thickness of dye-supported metal oxide layer 14a, it would tend to be difficult to uniformly form the dye-supported metal oxide layer 14a and thus difficult to seal the cell, and therefore the thickness of the short circuit-prevention layer 13 is preferably equal to or less than one-tenth of the thickness of the dye-supported metal oxide layer 14a.

In the frame of the short circuit-prevention layer 13 above, the dye-supported metal oxide layer 14a is formed so as to cover the conductive surface 12a of the base 12. Specifically, the dye-supported metal oxide layer 14a is formed on the conductive surface 12a of the base 12 in the frame of the short circuit-prevention layer 13 and on the frame of the short circuit-prevention layer 13, and thus the dye-supported metal oxide layer 14a is configured to extend onto the short circuit-prevention layer 13. With such a configuration, the electrolyte 51 sealed in the sealed space defined by the photoelectric conversion electrode 21, the counter electrode 31 and the sealing material 41 is spaced apart from the conductive surface 12a of the base 12, and consequently the electrolyte 51 and the conductive surface 12a of the base 12 are prevented from making contact with each other.

The dye-supported metal oxide layer 14a has a configuration in which a dye is supported on (adsorbed in) the porous metal oxide layer 14. The metal oxide constituting the dye-supported metal oxide layer 14a (metal oxide layer 14) is not particularly limited, and examples thereof include titanium oxide, zinc oxide, tin oxide, niobium oxide, zirconium oxide, tungsten oxide, silicon oxide, aluminum oxide, and mixtures thereof. Note that these metal oxides may be used alone or in combination. Also, the metal oxide may contain: metal such as titanium, tin, zinc, iron, tungsten, zirconium, strontium, indium, cerium, vanadium, niobium, tantalum, cadmium, lead, antimony and bismuth; metal oxides thereof; and metal chalcogenide thereof. Among these, titanium oxide and zinc oxide are preferable since they can be formed at relatively low cost and have high photoelectric conversion characteristics.

A dye constituting the dye-supported metal oxide layer 14a is not particularly limited, and may be any of, for example, a water-soluble dye, a non water-soluble dye, or an oil-soluble dye. A dye having a desired photo-absorption band and absorption spectrum may be appropriately selected according to the performance required for a photoelectric conversion electrode. By using a sensitive dye, the performance of a photoelectric conversion device can be further enhanced.

Specific examples of the dye constituting the dye-supported metal oxide layer 14a include a xanthene-based dye such as eosin Y, a coumarin-based dye, a triphenylmethane-based dye, a cyanine-based dye, a merocyanine-based dye, a phthalocyanine-based dye, a porphyrin-based dye, a polypyridine metal complex dye, a ruthenium bipyridinium-based dye, an azo dye, a quinone-based dye, a quinonimine-based dye, a quinacridone-based dye, a squarium-based dye, a perylene-based dye, an indigo-based dye, and a naphthalocyanine-based dye, but the dye is not particularly limited to these examples. Note that these dyes may be used alone or in combination. In view of increasing the amount of dye to be supported, the dye preferably has an adsorptive group (e.g., a carboxyl group, a sulfonic group, and a phosphoric group) that interacts with a metal oxide.

The thickness of the dye-supported metal oxide layer 14a is not particularly limited, it is preferably from 0.05 to 50 µm, more preferably from 0.1 to 40 µm, and even more preferably from 1 to 30 µm. If this thickness is less than 0.05 µm, a short circuit-photocurrent (J_{SC}) might become low since the layer does not support sufficient dye. On the other hand, if the thickness exceeds 50 µm, the strength of the film might become insufficient or the fill factor (ff) might become low.

The counter electrode 31 is equipped with a transparent substrate 32 having a conductive substrate 32a. In this embodiment, the above-described transparent conductive film is formed as the conductive surface 32a on the transparent substrate 32. The transparent substrate 32 and the conductive surface 32a correspond respectively to the above-described translucent base 12 and the conductive surface 12a, and the raw materials, types, formation methods for the transparent substrate 32 and the conductive surface 32a are similar to those for the base 12 and the conductive surface 12a. Note that the electrode used as the counter electrode 31 is not limited to those having the structure of this embodiment, and known structures may be appropriately used, e.g., a structure in which a film made of: metal such as platinum, gold, silver, copper, aluminum, indium, molybdenum and titanium; a carbon; a conductive polymer; or the like is formed on a base having conductivity such as a metal plate or on a conductive film on a transparent substrate.

The sealing material 41 is provided between the photoelectric conversion electrode 21 and the counter electrode 31 so as to surround the periphery of the dye-supported metal oxide layer 14a arranged between the photoelectric conversion electrode 21 and the counter electrode 31. The sealing material 41 is formed in a substantially rectangular frame shape so as to have an internal size wider than the external size of the dye-supported metal oxide layer 14a and to cover a part of the short circuit-prevention layer 13. With such a configuration, the dye-supported metal oxide layer 14 and the sealing material 41 are spaced apart from each other by a predetermined distance Δs.

Known materials may be appropriately used for the raw material (sealant) constituting the sealing material 41 without any particular limitation. For example, a UV curable material may be selected when a photo-curing reaction by UV light irradiation is used, while a thermosetting material may be selected when a thermosetting reaction is used. In this embodiment, since the sealing material 41 is prevented from infiltrating into the dye-supported metal oxide layer 14a as described above, the sealing material 41 may preferably be a cured resin article which is obtained by curing an uncured resin composition. Specific examples of a resin composition constituting the sealing material 41 include (meth)acrylic-based resin, polyolefin-based resin, urethane-based resin, urethane acrylate-based resin, silicone-based resin, modified silicone-based resin, polyisobutylene resin, polybutadiene resin, epoxy-based resin, epoxy acrylate-based resin, polyether-based resin, polyester-based resin, fluorine-based resin, and mixtures thereof, and these resin compositions may be used, with an addition of a reactive functional group as appropriate, through a thermosetting or photo-curing reaction. Also, a material, so-called sealing agent, e.g., a resin sheet made of polyethylene, polyethylene fluoride ionomer, or the like may be used as the sealing material 41. Note that they may be used alone or in combination. Among these, the materials which exhibit an excellent adhesiveness with respect to the short circuit-prevention layer 13 are preferably used as the sealing material 41, and more specifically, selecting the same or the same type of raw material as the raw material of the short circuit-prevention layer 13 is preferable. For example, if silicone-based resin, modified silicone-based resin or silane coupling agent is used for the short circuit-prevention layer 13, an organic compound having a siloxane bond, e.g., reactive polybutadiene resin containing silicone-based resin or a polysiloxane compound, is preferably selected as the sealing material 41. In view of enhancing productivity and cost efficiency, a resin composition constituting the sealing material 41 is more preferably a UV curable resin or a thermosetting resin, and even more preferably a UV curable resin.

It is preferable that the sealing material 41 is used in combination with a solid spacer. The use of the solid spacer enables the distance between the photoelectric conversion electrode 21 and the counter electrode 31 to be controlled accurately, enhances the mechanical strength with respect to stress applied from the outside, and improves sealing performance (hermetic performance). Specific examples of the solid spacer include a glass bead, various types of resin molded products, silica, woven fabric and non-woven fabric, but the solid spacer is not particularly limited thereto.

In this embodiment, a quasi-solid electrolyte containing conductive particles is used as the electrolyte 51. In this specification, the term "quasi-solid" means the concept which includes not only a solid but also a gel solid or a clayey solid that show almost no fluidity but is deformable by application of stress. Specifically, the term "quasi-solid" means a property of having no shape change or only a slight shape change under its own weight after being left standing for a predetermined time period. When a quasi-solid electrolyte is used as the electrolyte 51, the effects and advantages described above can be achieved particularly remarkably.

Although not particularly limited, the conductive particles contained in the electrolyte 51 are preferably conductive carbon materials, specific examples of which include carbon black, carbon fiber, carbon nanotube, graphite, activated carbon, and fullerene. Note that these materials may be used alone or in combination. In consideration of conductivity and economic efficiency, carbon black, carbon fiber, graphite, and carbon nanotube are preferable, and carbon black is more preferable. Specific examples of carbon black include ketjen black, acetylene black, and oil furnace black. The average particle diameter of secondary particles of the conductive particles is not particularly limited and may be set such that it can prevent the conductive particles from intruding into a deep part of the dye-supported metal oxide layer 14a, but, in general, the average particle diameter is preferably from the order of nanometers to the order of micrometers.

The content of the conductive carbon material may be appropriately set according to the required performance and is not particularly limited, but the content in the total quasi-solid electrolyte is preferably from 5 to 80 wt% and more preferably from 20 to 60 wt%.

The quasi-solid electrolyte preferably contains a redox agent. Though the redox agent is not particularly limited, specific examples of the redox agent include a combination of iodine and iodide (e.g., metal iodide, quarternary ammonium iodide, or the like), a combination of bromine and bromide (e.g., metal bromide, quarternary ammonium bromide, or the like), and a combination of chlorine and a chlorine compound (e.g., metal chloride, quarternary ammonium chloride, or the like). Especially, iodine-based redox agent tends to provide high photoelectric conversion efficiency. The content of the redox agent in the total quasi-solid electrolyte is preferably from 1 × 10⁻⁴ to 1 × 10⁻² mol/g, and more preferably from 1 × 10⁻³ to 1 × 10⁻² mol/g.

The quasi-solid electrolyte may contain a solvent, so long as the quasi-solid property can be maintained. Although the solvent is not particularly limited, specific examples of the solvent include: nitriles such as acetonitrile, methoxyacetonitrile, propionitrile, 3-methoxypropionitrile, butoxypropionitrile, benzonitrile, and nitrile valerate; carbonates such as dimethyl carbonate, diethyl carbonate, methylethyl carbonate, ethylene carbonate, and propylene carbonate; monohydric alcohols such as ethylene glycol monoalkyl ether, propylene glycol monoalkyl ether, polyethylene glycol monoalkyl ether, and polypropylene glycol monoalkyl ether; polyhydric alcohols such as ethylene glycol, propylene glycol, polyethylene glycol, polypropylene glycol, and glycerin; esters such as ethyl acetate and methyl propionate; ethers such as dioxane, ethylene glycol dialkyl ether, propylene glycol dialkyl ether, polyethylene glycol dialkyl ether, polypropylene glycol dialkyl ether, 1,2-dimethoxyethane, 1,3-dioxosilane, tetrahydrofuran, and 2-methyltetrahydrofuran; lactones such as γ-butyrolactone, α-methyl-γ-butyrolactone, β-methyl-γ-butyrolactone, γ-valerolactone, and 3-methyl-γ-valerolactone; sulfoxides such as dimethyl sulfoxide; heterocyclic compounds such as 3-methyl-2-oxazolidinone and 2-methylpyrrolidone; and aprotic polar compounds such as sulfolane, dimethyl sulfoxide, and dimethyl formamide. Note that they may be used alone or in combination. The content of the solvent in the total quasi-solid electrolyte is preferably 1 to 80 wt%.

The quasi-solid electrolyte may contain a fire-retardant, low-volatile ionic liquid, so long as the quasi-solid property can be maintained. For example, an imidazolium-based iodine compound such as methylpropyl imidazolium iodide and methylbutyl imidazolium iodide is widely used as the ionic liquid. However, the ionic liquid is not particularly limited to those mentioned above, and a known ionic liquid may be used. Examples of the ionic liquid include an ionic liquid such as imidazolium-based, pyridine-based, alicyclic amine-based, aliphatic amine-based, and azonium amine-based, and an ionic liquid described in European Patent No. 718288, WO 95/18456 Pamphlet, J. Electrochem. Soc. Vol. 143, No.10, p.3099 (1996), and Inorg. Chem. Vo1.35, p.1168 (1996). Note that they may be used alone or in combination. The content of the ionic liquid in the total quasi-solid electrolyte is preferably 1 to 80 wt%.

The quasi-solid electrolyte may contain particles. Specific examples of the particles include TiO₂, SnO₂, SiO₂, ZnO, Nb₂O₅, In₂O₃, ZrO₂, Al₂O₃, WO₃, SrTiO₃, Ta₂O₅, La₂O₃, Y₂O₃, Ho₂O₃, Bi₂O₃, CeO₂, and C. Note that they may be used alone or in combination. The average particle diameter of the particles is not particularly limited, but is preferably about 2 to 1000 nm. By containing the particles in the quasi-solid electrolyte, not only ion diffusion of iodine in the electrolyte can be made but also a conductive path by a Grotthuss mechanism can be formed on a composite particle surface, which may contribute to improved characteristics.

The quasi-solid electrolyte may contain various additives according to required performance. Additives typically used in batteries, solar cells, and the like can be appropriately used. Specific examples of the additives include: a p-type conductive polymer such as polyaniline, polyacetylene, polypyrrole, polythiophene, polyphenylene, polyphenylene vinylene, and a derivative of any of them; a molten salt composed of a combination of a halide ion and an imidazolium ion, a pyridinium ion, a triazolium ion, or a derivative of any of them; a gellant; an oil gellant; a dispersant; a surfactant; and a stabilizer.

Preparation of the quasi-solid electrolyte may be performed according to an ordinary method. For example, by mixing or kneading the conductive carbon material with small amounts of solvent, ionic liquid, redox agent, and various types of additives that are added as needed, it is possible to prepare a uniform quasi-solid electrolyte.

Manufacturing methods of the photoelectric conversion electrode 21 and the dye-sensitized solar cell 100 according to this embodiment will be described below.

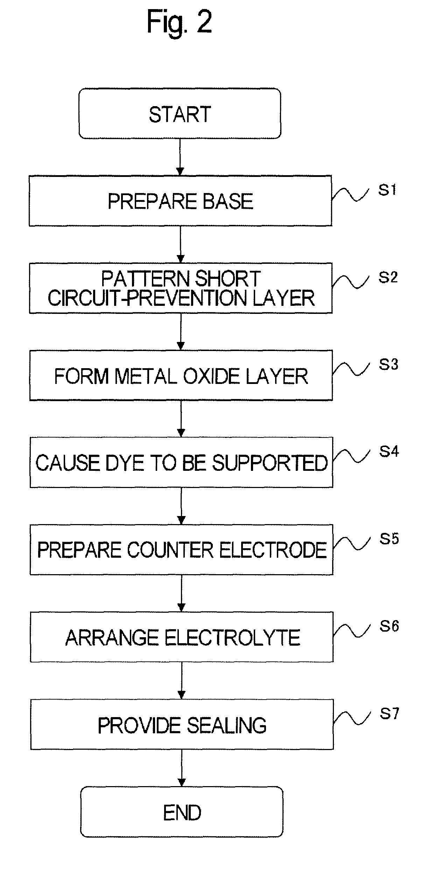

Fig. 2 is a flowchart showing the manufacturing methods of the photoelectric conversion electrode 21 and the dye-sensitized solar cell 100 according to this embodiment. First, the base 12 having the conductive surface 12a is prepared (S1), the short circuit-prevention layer 13 is patterned to have a frame shape on the conductive surface 12a (S2), then the metal oxide layer 14 is formed on the conductive surface 12a in the frame of the short circuit-prevention layer 13 and on the frame of the short circuit-prevention layer 13 (S3), and the dye-supported metal oxide layer 14a is formed by causing the dye to be supported on (adsorbed in) the metal oxide layer 14 (S4), thereby fabricating the photoelectric conversion electrode 21, being the working electrode. Next, the counter electrode 31 is prepared (S5), the electrolyte 51 is arranged between the conductive surface 32a of the counter electrode 31 and the dye-supported metal oxide layer 14a of the photoelectric conversion electrode 21 (S6), and the photoelectric conversion electrode 21 and the counter electrode 31 are bonded to each other via the electrolyte 51 and the peripheries of the photoelectric conversion electrode 21 and the counter electrode 31 are jointed and sealed using a spacer or the like as appropriate (S7), thereby fabricating the dye-sensitized solar cell 100.

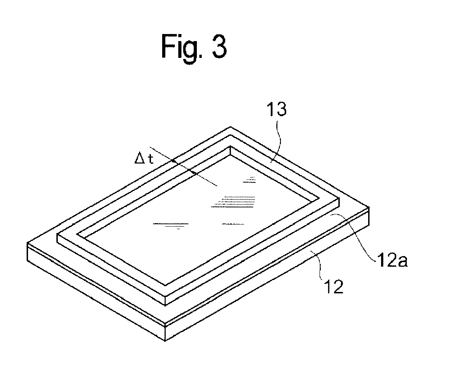

Fig. 3 is a perspective view schematically showing the manufacturing method of the photoelectric conversion electrode 21 according to this embodiment. In the step of patterning the short circuit-prevention layer 13 (S2), the method of patterning the short circuit-prevention layer 13 on the conductive surface 12a of the base 12 is not particularly limited, and known thin-film formation methods may be applied thereto. Specifically, for example, by applying the above-mentioned insulating material into a frame shape on the conductive surface 12a of the base 12 using a mask, the short circuit-prevention layer 13 can be formed. The method of applying the insulating material may be appropriately selected from known techniques including, for example, vacuum deposition, reactive deposition, sputtering, ion plating, vapor deposition such as CVD and PVD, coating techniques such as spray coating, spin coating, dip coating, calendar coating and dispenser coating, transfer process, screen printing, ink jet, sol-gel process, and the like. Note that various types of known treatment may be provided as needed, examples of which include corona discharge treatment, plasma irradiation treatment, UV light or IR light irradiation treatment, heating treatment, washing treatment, drying treatment, and the like.

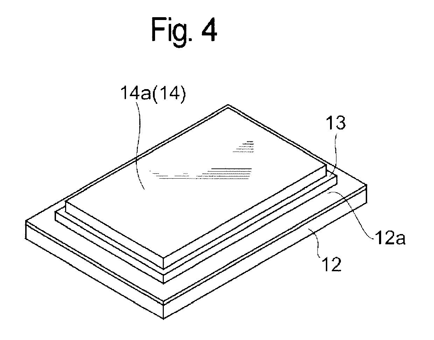

Fig. 4 is a perspective view schematically showing the manufacturing method of the photoelectric conversion electrode 21 according to this embodiment. In steps S3 and S4 for forming the dye-supported metal oxide layer 14a, the method of forming the dye-supported metal oxide layer 14a is not particularly limited, and known formation methods may be applied thereto. Examples of the methods include: a method in which a solution (dispersion, suspension) containing the above-described metal oxide is applied onto the conductive surface 12a in the frame of the short circuit-prevention layer 13 and onto the frame of the short circuit-prevention layer 13, and then sintering is performed, or low-temperature treatment at a temperature around 150°C is performed, to form the metal oxide layer (semiconductor layer) 14, and the above-described dye is made to be supported on (adsorbed in) the metal oxide layer 14; and a method in which the metal oxide layer 14 is formed on the conductive surface 12a in the frame of the short circuit-prevention layer 13 and on the frame of the short circuit-prevention layer 13 by vacuum deposition, reactive deposition, sputtering, ion plating, vapor deposition such as CVD and PVD, sol-gel process, or the like, and the above-described dye is made to be supported on (adsorbed in) the metal oxide layer 14. Also, electrochemical methods using electrolyte solutions may be employed, examples of which include: a method in which the metal oxide layer 14 may be fabricated on the conductive surface 12a in the frame of the short circuit-prevention layer 13 and on the frame of the short circuit-prevention layer 13 by cathode electrolytic deposition using an electrolyte solution containing the above-described metal oxide and then the above-described dye is made to be supported on (adsorbed in) the metal oxide layer 14; and a method in which cathode electrolytic deposition is performed using an electrolyte solution containing the above-described metal oxide and dye.

Here, in the case of forming the metal oxide layer 14 by cathode electrolytic deposition, by using the electrolyte solution containing the metal salt and the dye, the formation of the metal oxide layer 14 and the causing the dye to be supported can be simultaneously performed to thereby enable the dye-supported metal oxide layer 14a to be promptly formed. An electrolysis condition can be appropriately set based on characteristics of the materials to be used, according to an ordinary method. For example, when forming the dye-supported metal oxide layer 14a made of ZnO and the dye, it is preferable for a reduction electrolysis potential to be about from - 0.8 to -1.2 V (vs. Ag/AgCl), a pH to be about from 4 to 9, and a bath temperature of the electrolyte solution to be about from 0 to 100°C. Moreover, it is preferable for a metal ion concentration in the electrolyte solution to be about from 0.5 to 100 mM, and a dye concentration in the electrolyte solution to be about from 50 to 500 µM. In addition, in order to further enhance the photoelectric conversion characteristics, the dye supported on the dye-supported metal oxide layer 14a may be desorbed and another dye may be re-adsorbed thereto.

Note that, in steps S4 for causing the dye to be supported, the method of causing the dye to be supported on (adsorbed in) the metal oxide layer 14 is not particularly limited and known formation methods may be applied thereto. Examples of the method include a method of immersing the metal oxide layer 14 in a solution containing the dye and a method of coating the metal oxide layer 14 with a solution containing the dye. A solvent for the dye-containing solution used here can be appropriately selected from known solvents such as water, an ethanol-based solvent, a nitrile-based solvent, and a ketone-based solvent, according to solubility, compatibility, or the like of the dye to be used.

In step S6 for arranging the electrolyte 51, the method of arranging the quasi-solid electrolyte is not particularly limited, and known formation methods may be applied thereto. Examples of the methods include: a method the quasi-solid electrolyte is directly coated onto the dye-supported metal oxide layer 14a and then pressed; and a method in which the quasi-solid electrolyte is diluted with a solvent, the resulting quasi-solid electrolyte having a low viscosity is directly coated onto the dye-supported metal oxide layer 14a, and then the solvent is removed; however, the methods are not limited to these examples. Note that the timing at which the electrolyte 51 is sealed is not particularly limited to the above example. For example, after bonding the photoelectric conversion electrode 21 and the counter electrode 31 to each other via the sealing material 41, the electrolyte 51 may be injected into the sealed space from an inlet port (not shown) that is formed separately, and then the inlet port may be sealed.

In the dye-sensitized solar cell 100 according to this embodiment, a short circuit between the conductive surface 12a of the base 12 and the electrolyte 51 is prevented by the short circuit-prevention layer 13 and the dye-supported metal oxide layer 14a in the region where the dye-supported metal oxide layer 14a is not formed, while such a short circuit is prevented by the dye-supported metal oxide layer 14a not allowing the intrusion of the conductive particles of the electrolyte 51 in the region where the dye-supported metal oxide layer 14a is formed. In particular, the dye-sensitized solar cell 100 is advantageous as compared to the related art with respect to the point that the short circuit within the cell can be securely prevented even when a highly-conductive electrolyte 51 is used. Furthermore, since the dye-supported metal oxide layer 14a is formed, not via the short circuit-prevention layer 13, but directly on the conductive surface 12a of the base 12, the cell resistance is not increased unintentionally. In addition, the dye-supported metal oxide layer 14a and the sealing material 41 are arranged apart from each other via the short circuit-prevention layer 13, and the sealing material 41 is thereby prevented from infiltrating into the dye-supported metal oxide layer 14a, which suppresses degradation of the photoelectric conversion characteristics and the durability that might be caused by such infiltration of the sealing material 41. Accordingly, the dye-sensitized solar cell 100 in this embodiment provides improved photoelectric conversion characteristics as well as improved durability as compared to the related art, and therefore provides improved reliability.

Also, according to the manufacturing method of the dye-sensitized solar cell 100 of this embodiment, the dye-sensitized solar cell 100 having excellent photoelectric conversion characteristics can be manufactured easily, stably, and at a low cost, without unintentionally increasing the cell resistance and unintentionally degrading the photoelectric conversion characteristics and the durability. Accordingly, the resulting dye-sensitized solar cell 100 achieves enhanced productivity and enhanced economic efficiency.

Note that appropriate modifications may be made to this embodiment without departing from the gist thereof.
For example, the dye-supported metal oxide layer 14a may be formed so as to cover only the conductive surface 12a in the frame of the short circuit-prevention layer 13. In other words, the configuration in which the dye-supported metal oxide layer 14a covers a part of the short circuit-prevention layer 13 may be omitted. In the same way, the configuration in which the sealing material 41 covers a part of the short circuit-prevention layer 13 may be omitted.
Alternatively, the conductive surface 12a may be formed only on a part of the base 12, and the short circuit-prevention layer 13 may be formed on the base 12 and the conductive surface 12a and/or on the base 12.

**Examples**
The present invention will be described below in more detail by way of Examples, but the present invention is not limited to the Examples.

(Example 1)
First, a transparent glass substrate (TCO: manufactured by AGC Fabritech CO., LTD. (size: 25 mm long x 25 mm wide)) having a transparent conductive film made of SnO₂ doped with fluorine was prepared as a base and was pre-rinsed. After providing masking by attaching a kapton tape in a frame shape onto the transparent conductive film on the transparent glass substrate, a film of silica was formed so as to have the thickness of about 300 nm by sputtering, and by removing the kapton tape from the transparent glass substrate, a short circuit-prevention layer having a frame shape (external size: 10.0 mm long x 10.0 mm wide, internal size: 5.0 mm long x 5.0 mm wide, frame width Δt: 2.5 mm) was patterned.

Next, commercially available zinc oxide particles (trade name "nano ZINC100," manufactured by Honjo Chemical Corporation) were added to toluene in an amount of 30 wt%, and a dispersion process was carried out for 30 minutes using a paint shaker to obtain a zinc oxide slurry. This zinc oxide slurry was coated onto the transparent conductive film, positioned in the frame of the short circuit-prevention layer, of the transparent glass substrate and onto the short circuit-prevention layer, and was then dried by heating at 100 °C for 30 minutes using an electric furnace. The rate of temperature increase was 2 °C/min. The coating of the zinc oxide slurry and the heating were repeated five times. As a result, a metal oxide layer (zinc oxide layer) having a rectangular shape in plan view (7.0 mm long x 7.0 mm wide x 10 µm thick) was formed so as to completely cover the transparent conductive film in the frame of the short circuit-prevention layer and to extend onto the short circuit-prevention layer by about 1.0 mm.

Next, a solution of CH₃CN containing 500 µM of dye represented by the formula below was prepared as a dye-containing solution. In this dye-containing solution, the metal oxide layer, which had been subjected to cathode electrolytic deposition, and then rinsed with purified water and dried, was immersed, so that the dye was adsorbed into the metal oxide layer. Then the metal oxide layer was rinsed with acetonitrile solution and dried to form a dye-supported metal oxide layer.
With the operations above, a photoelectric conversion electrode of Example 1, which has a structure similar to those shown in Figs. 1 and 4, was fabricated.

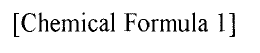

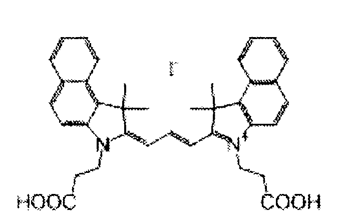

Next, a quasi-solid electrolyte obtained by mixing and kneading carbon black, tetrabutylammonium iodide and 3-methoxypropionitrile was coated onto the dye-supported metal oxide layer so as to cover it. Then a UV curable adhesive (31 x 101C manufactured by ThreeBond, Co., Ltd.) was coated in a frame shape onto the substrate of the photoelectric conversion electrode using a dispenser. The UV curable adhesive was coated to have a width of about 1.0 mm from the outer end of the substrate of the photoelectric conversion electrode so as to be spaced apart from the dye-supported metal oxide layer.

Using, as is, a transparent glass substrate (TCO, manufactured by AGC Fabritech CO., LTD.) having a fluorine-doped SnO as the transparent conductive film as a counter electrode, the counter electrode was bonded to the photoelectric conversion electrode via the quasi-solid electrolyte and the spacer, and then the UV curable adhesive was cured by irradiating it with UV light, thereby providing sealing. The cured UV curable adhesive had a width of about 1.5 mm, and while the cured UV curable adhesive was spaced apart from the dye-supported metal oxide layer, a part thereof extended onto the short circuit-prevention layer from the substrate of the photoelectric conversion electrode.
With the operations above, a dye-sensitized solar cell of Example 1, which has a structure similar to the structure shown in Fig. 1, was fabricated.

(Comparative Example 1)
A photoelectric conversion electrode of Comparative Example 1 was fabricated with the same operations as those in Example 1, except that the formation of the short circuit-prevention layer was omitted and a metal oxide layer having a rectangular shape in plan view (7.0 mm long x 7.0 mm wide x 10 µm thick) was formed using a mask.
Using the resulting photoelectric conversion electrode of Comparative Example 1, a dye-sensitized solar cell of Comparative Example 1 was fabricated with the same operations as those in Example 1, except that a UV-curable resin was coated in a frame shape having a width of about 1.0 mm so as to make close contact with the periphery of the dye-supported metal oxide layer.

(Comparative Example 2)
A photoelectric conversion electrode of Comparative Example 2 was fabricated with the same operations as those in Example 1, except that, after a metal oxide layer having a rectangular shape in plan view (7.0 mm long x 7.0 mm wide x 10 µm thick) was formed using a mask, this metal oxide layer was immersed in an ethanol solution of aluminum butoxide and then dried, thereby forming an aluminum oxide film on a surface of the transparent conductive film that was not covered with the metal oxide layer, and then the dye is made to be supported on the metal oxide layer.
Using the resulting photoelectric conversion electrode of Comparative Example 2, a dye-sensitized solar cell of Comparative Example 2 was fabricated with the same operations as those in Example 1, except that a UV-curable resin was coated in a frame shape having a width of about 1.0 mm from the outer end of the substrate of the photoelectric conversion electrode so as to be spaced apart from the dye-supported metal oxide layer.

(Comparative Example 3)
A photoelectric conversion electrode of Comparative Example 3 was fabricated with the same operations as those in Example 1, except that the formation of the short circuit-prevention layer was omitted and a metal oxide layer having a rectangular shape in plan view (7.0 mm long x 7.0 mm wide x 10 µm thick) was formed using a mask.
Using the resulting photoelectric conversion electrode of Comparative Example 3, a dye-sensitized solar cell of Comparative Example 3 was fabricated with the same operations as those in Example 1, except that a UV-curable resin was coated in a frame shape having a width of about 1.0 mm from the outer end of the substrate of the photoelectric conversion electrode so as to be spaced apart from the dye-supported metal oxide layer. The resulting dye-sensitized solar cell of Comparative Example 3 had a structure in which the electrolyte and the transparent conductive film of the substrate are in contact with each other.

**Evaluation**
The photoelectric conversion efficiency (η: %) of each of the dye-sensitized solar cells (cells) of Example 1 and Comparative Examples 1 to 3 was measured using a solar simulator of AM-1.5 (1000W/m²). Note that the photoelectric conversion efficiency (η: %) is expressed as a percentage obtained by: dividing the maximum output, which is a product of a voltage and a current obtained by sweeping the voltage of a photoelectric conversion device using a source meter and measuring a response current, by a light intensity per 1 cm²; and multiplying the resulting value by 100. The photoelectric conversion efficiency (η: %) is represented by the following equation: photoelectric conversion efficiency (η: %) = (maximum output / light intensity per 1 cm²) x 100.

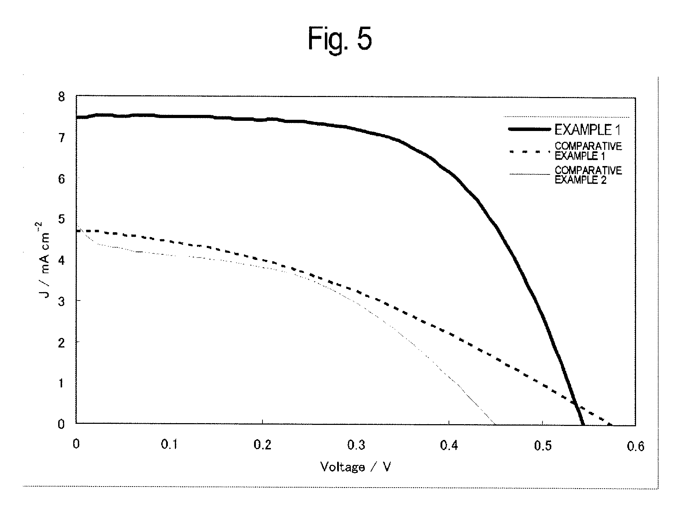

Fig. 5 shows the evaluation results of the dye-sensitized solar cells (cells) of the Example and Comparative Examples 1 and 2. Note that Comparative Example 3 could not function as a dye-sensitized solar cell since the transparent conductive film of the substrate and the quasi-solid electrolyte made contact with each other and a short circuit occurred, and therefore the evaluation result of Comparative Example 3 was omitted in Fig. 5.

As is obvious from the results shown in Fig. 5, the dye-sensitized solar cell of Example 1 was verified to provide superior photo-conversion characteristics and durability as compared to those in the dye-sensitized solar cell of Comparison Example 1 for which the formation of the short circuit-prevention layer was omitted. This result suggested that, in the case where the dye-supported metal oxide electrode and the UV-curable resin are in close contact with each other as in Comparative Example 1, an uncured UV-curable resin intruded into the pores of the dye-supported metal oxide electrode, which degraded the photoelectric conversion characteristics and the durability. It can be inferred that, when the UV-curable resin was irradiated with the UV light to be cured, the dye-supported metal oxide electrode shielded the UV light, and the uncured UV-curable resin remained in the cell, and this remaining uncured UV-curable resin resulted in the degradation of the photoelectric conversion characteristics and the durability.

As is obvious from the result shown in Fig. 5, the dye-sensitized solar cell of Example 1 was verified to provide superior photo-conversion characteristics and durability as compared to those in the dye-sensitized solar cell of Comparison Example 2 in which the short circuit-prevention layer made of aluminum oxide was formed after the formation of the metal oxide electrode as in the related art. The dye-sensitized solar cell of Comparative Example 2 exhibited lower current and voltage, which suggests that the performance of the device itself was degraded. Accordingly, it can be inferred that, in the case where the short circuit-prevention layer was formed after the formation of the metal oxide electrode, as in Comparative Example 2, a part of the surface of the metal oxide electrode would be coated with the short circuit-prevention layer and/or the insulation of the transparent conductive film of the substrate would become insufficient and thus a short circuit would be likely to occur, which resulted in the degradation of the photoelectric conversion characteristics and durability.

Also, when the dye-sensitized solar cells of Example 1 and Comparative Example 1 were each subjected to a high-temperature and high-humidity reliability test under the condition of 85°C and 85%RH to measure the transition of the photoelectric conversion efficiency, the photoelectric conversion efficiency of the dye-sensitized solar cell of Comparative Example 1, for which the formation of the short circuit-prevention layer was omitted, became less than the half of the initial efficiency as of when 500 hundred hours elapsed. On the other hand, the photoelectric conversion efficiency of the dye-sensitized solar cell of Example 1 was maintained at 90% or more of the initial efficiency. These results proved that the dye-sensitized solar cell of Example 1 had an excellent durability. It can also be inferred that, in the same way as described above, these results resulted from the presence or non-presence of the intrusion of the UV-curable resin into the dye-supported metal oxide layer (the presence or non-presence of an uncured resin component contained in the dye-supported metal oxide electrode).

### Industrial Applicability

As described above, the dye-sensitized solar cell, the manufacturing method thereof, and the manufacturing method of the working electrode for the dye-sensitized solar cell in the present invention can prevent, even when a highly-conductive electrolyte is employed, a short circuit between a transparent conductive film of the working electrode and the electrolyte, and can enhance the reliability with improved photoelectric conversion characteristics and improved durability. Accordingly, the present invention can be widely applied to electronic or electric devices including the dye-sensitized solar cell, as well as various types of appliances, equipment, systems and the like that include these electronic and electric devices.

### Description of Numerical References

- 12:: base
- 12a:: conductive surface
- 13:: short circuit-prevention layer
- 14:: metal oxide layer
- 14a:: dye-supported metal oxide layer
- 21:: photoelectric conversion electrode
- 31:: counter electrode
- 32:: transparent substrate
- 32a:: conductive surface
- 41:: sealing material
- 51:: electrolyte
- 100:: dye-sensitized solar cell

## Claims

1. A dye-sensitized solar cell comprising:
a working electrode;
a counter electrode that is arranged apart from the working electrode so as to face the working electrode;
an electrolyte provided between the working electrode and the counter electrode; and
a sealing material that seals the electrolyte, wherein:
the electrolyte is a quasi-solid electrolyte comprising conductive particles;
the working electrode has a base having a conductive surface and a dye-supported metal oxide layer formed on a part of the conductive surface;
a short circuit-prevention layer is patterned in a frame shape in a region on the conductive surface where the dye-supported metal oxide layer is not formed, so as to surround a periphery of the dye-supported metal oxide layer;
the short circuit-prevention layer is formed to be thinner than the dye-supported metal oxide layer, and the dye-supported metal oxide layer is formed so as to cover the conductive surface in the frame of the short circuit-prevention layer and to extend onto the short circuit-prevention layer; and
the dye-supported metal oxide layer and the sealing material are arranged apart from each other via the short circuit-prevention layer.

2. The dye-sensitized solar cell according to claim 1, wherein the short circuit-prevention layer is not formed on a surface of the dye-supported metal oxide layer.

3. The dye-sensitized solar cell according to claim 1 or 2, wherein the sealing material is a cured resin article.

4. A manufacturing method of a working electrode for a dye-sensitized solar cell, comprising the steps of:
preparing a base having a conductive surface;
patterning a short circuit-prevention layer in a frame shape on the conductive surface;
and
forming a dye-supported metal oxide layer on the conductive surface in the frame of the short circuit-prevention layer and on the frame of the short circuit-prevention layer, the steps being carried out in this order.

5. A manufacturing method of a dye-sensitized solar cell, comprising the steps of:
preparing a base having a conductive surface;
patterning a short circuit-prevention layer in a frame shape on the conductive surface;
and
forming a dye-supported metal oxide layer on the conductive surface in the frame of the short circuit-prevention layer and on the frame of the short circuit-prevention layer and thereby fabricating a working electrode, the steps being carried out in this order, and the method further comprising the steps of:
preparing a counter electrode;
arranging an electrolyte between the working electrode and the counter electrode;
arranging a sealing material on outer ends of opposing surfaces of the working electrode and the counter electrode to seal and joint peripheries of the working electrode and the counter electrode, the sealing material being arranged apart from the dye-supported metal oxide layer.
